# EUROPEAN PATENT APPLICATION

(11) **EP 4 685 630 A1**
(43) Date of publication of application: **28.01.2026**
(21) Application number: 24190642.9
(22) Date of filing: 24.07.2024
(51) Int. Cl.: G06F 8/30, G05B 19/00, G06F 8/35, G06F 8/36, G06N 20/00, B25J 9/16, G06F 11/36

(54) **GENERATION OF A CONTROL CODE USING LARGE LANGUAGE MODELS FOR CONTROLLING A TECHNICAL SYSTEM**

(71) Applicant: Siemens Aktiengesellschaft, 80333 München (DE)
(72) Inventor: Denk, Martin, 85256 Vierkirchen (DE)
(74) Representative: Siemens Patent Attorneys

(57) **Abstract**

The inventions relates to an apparatus (100) and a computer-implemented method for generating a control code for controlling a technical system (TS). The apparatus comprises:
- an interface (101) that is configured to access a pre-trained language model (LLM1), wherein the pre-trained language model (LLM1) is configured to generate source code depending on provided input data,
- an input module (102) that is configured to receive text data (TD) as input data for the pre-trained language model (LLM1),
- wherein the text data (TD) are natural language text data,
- wherein the text data (TD) specify that source code generated by the pre-trained language model is to be suited for an Entity Component System architecture (ECS) and for the technical system (TS),
- and wherein the text data (TD) comprise a generation request (GR) for generating at least one component, at least one system and/or at least one entity according to the specified Entity Component System architecture,

- a processor (103) that is configured to process the text data (TD) using the pre-trained language model (LLM1), wherein the at least one component (COMP), the at least one system (SYS) and/or the at least one entity (ENT) according to generation request (GR) is generated as source code (SC),
and
- an output module (104) that is configured to provide the source code (SC) for controlling the technical system (TS).

## Description

The present invention relates to an apparatus and a computer-implemented method for generating a software control code for controlling a technical system, as well as a computer program product.

The generation of computer simulation models for technical systems, also known as digital twins, can be time-consuming, expensive and usually requires critical know-how. In industrial settings, digital twins are important tools for many applications, as for example optimization, simulation, predictive maintenance, training of employees on the shopfloor, risk management, scenario testing etc.

Adapting and/or generating digital twins automatically can be quite challenging due to the complex domain knowledge required. Large Language Models (LLMs), such as GPT-3 or BERT, can provide source code portions/snippets that can be used in such simulation models. In particular, LLMs can be used to generate source code from natural language description. However, usually such generated code requires further processing in order to be able to use the code for computer simulation purposes for technical systems.

It is therefore an objective of the present invention to simplify the automatic generation of code for a technical system using a Large Language Model.

The object is solved by the features of the independent claims. The dependent claims contain further developments of the invention.

The invention provides according to the first aspect an apparatus for generating a control code for controlling a technical system, comprising:
- an interface that is configured to access a pre-trained language model, wherein the pre-trained language model is configured to generate source code depending on provided input data,
- an input module that is configured to receive text data as input data for the pre-trained language model,
   - wherein the text data are natural language text data,
   - wherein the text data specify that source code generated by the pre-trained language model is to be suited for an Entity Component System architecture and for the technical system,
   - and wherein the text data comprise a generation request for generating at least one component, at least one system and/or at least one entity according to the specified Entity Component System architecture,
- a processor that is configured to process the text data using the pre-trained language model, wherein the at least one component, the at least one system and/or the at least one entity according to generation request is generated as source code,
   and
- an output module that is configured to provide the source code for controlling the technical system.

The invention provides according to the second aspect a computer-implemented method for generating a control code for controlling a technical system, comprising the following steps:
- accessing a pre-trained language model, wherein the pre-trained language model is configured to generate source code depending on provided input data,
- receiving text data as input for the pre-trained language model, wherein the text data are natural language text data, wherein the text data specify that source code generated by the pre-trained language model is to be suited for an Entity Component System architecture and for the technical system, and wherein the text data comprise a generation request for generating at least one component, at least one system and/or at least one entity according to the specified Entity Component System architecture,
- processing the text data using the pre-trained language model, wherein the at least one component, the at least one system and/or the at least one entity according to the generation request is generated as source code,
   and
- providing the source code for controlling the technical system.

Within the context of embodiments of the invention, "pre-trained language model" can be understood to mean for example a Large Language Model (LLM). Such an LLM can be trained using natural language text data to output for example source code.

An Entity Component System (ECS) is a software design pattern. It is built on the principle of composition over inheritance, allowing for a high degree of flexibility in defining and managing objects. An ECS comprises entities that are composed from components of data, with systems which operate on these components.

For example, in a process simulation involving robots, tables, and material flow, an ECS can be utilized in the following way:
- Entity: Each physical or logical object in the simulation can be modeled as an entity. A robot, a table, or a piece of material would each be an entity.
- Components: Each entity can then be defined by one or more components that describe its state. For example, a robot could have components like position, speed, task list, etc. A table could have components like position, size, and load capacity. A piece of material could have components like type, weight, and destination.
- System: Systems are where the logic of the simulation resides. They operate on entities that have a certain set of components. For example, a 'Movement' system might handle the movement of robots, updating their position over time based on their speed. A 'Loading' system might handle robots picking up and depositing materials on tables.

By separating the state of objects (i.e., components) from the logic that operates on them (i.e., systems), an ECS allows for a decoupled and flexible design. This can be especially useful in a complex simulation where entities may have diverse and changing characteristics. Moreover, an ECS can facilitate efficient execution and scaling of a simulation, as systems can potentially run in parallel, and new entities/components/systems can be added or removed without affecting others.

It is an advantage of this invention that an LLM tailored to an ECS architecture is used to automatically generate source code that is suited for controlling the technical system. This provides also more flexibility in generation of a simulation model/digital twin of the technical system. The invention provides automatically embedding of code in the specified software architecture ECS, rather than just generating prompts for code snippets that need to be further processed. Using the proposed setup, proper source code can be directly generated as output from the LLM and therefore be used to control a technical system.

According to an embodiment of the invention, the text data can further specify source code of an available component, an available system and/or an available entity according to the specified Entity Component System architecture.

It is an advantage that already existing or available source code describing a component, a system and/or an entity is provided as input for the language model. Therefore, knowledge about the specific technical system can be embedded. Such additional input helps to further improve the generation of the source code.

According to another embodiment of the invention, the text data can further specify context information related to the technical system.

Context information can be for example domain know-how, such as text data from documents, manuals, books, etc. and helps to further improve the generation of the source code by the LLM.

According to another embodiment of the invention, the text data can further specify at least one cyber security constraint for the generated source code.

In other words, it can be defined that the generated source code shall comply with the specified cyber security constraint. For example, it can be specified that the generated source code should not contain any network communication and/or access to a given file system.

According to another embodiment of the invention, the apparatus can further comprise a cyber security module that is based on a second pre-trained language model and that is configured to validate the generated source code against the cyber-security constraint and to output a test result.

In that way it can be used to avoid common cybersecurity issues in the generated code. For example, the generated code can be run against pre-defined tests using the second pre-trained language model.

According to another embodiment of the invention, the apparatus can further comprise a validation module that is configured to validate a functionality of the generated source code and to output a validation result.

The generated source code can be tested against requirements. For example, efficiency of the generated source code can be tested.

According to another embodiment of the invention, the apparatus can further comprise a modification module that is configured to modify the generated source code depending on the test result and/or the validation result and to output a modified source code.

It is therefore possible to iteratively improve the generated source code.

According to another embodiment of the invention, the apparatus can further comprise a control module that is configured to control the technical system depending on the test result and/or the validation result using the generated source code.

The generated source code can therefore directly be deployed to the life system, i.e., used for controlling the technical system.

According to another embodiment of the invention, the apparatus can further comprise a simulator that is configured to execute the generated source code and to simulate the technical system.

The simulation can further validate the results from the LLM. The concept can be adapted to various digital twin domains such as fluid simulation, FEM, particle simulation, etc.

In addition, a computer program product (non-transitory computer readable storage medium having instructions, which when executed by a processor, performs actions) having program instructions for performing the aforementioned method according to embodiments of the invention is claimed.

The invention will be explained in more detail by reference to the accompanying figures.
- Fig. 1:: shows a first exemplary embodiment of an apparatus for generating a control code for controlling a technical system;
- Fig. 2:: shows a second exemplary embodiment of an apparatus for generating a control code for controlling a technical system; and
- Fig. 3:: shows an exemplary embodiment of a computer-implemented method for generating a control code for controlling a technical system.

Equivalent parts in the different figures are labeled with the same reference signs.

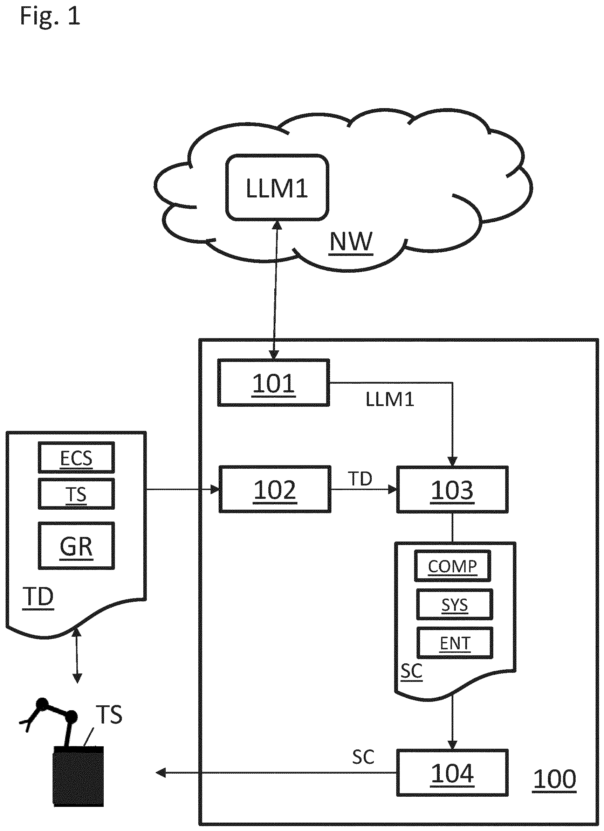

Figure 1 shows an exemplary embodiment of an apparatus 100 for generating a control code for controlling a technical system TS. The technical system TS can be for example a manufacturing plant or an industrial robot of such a manufacturing plant. The apparatus 100 is configured to generate source code for controlling and/or simulating the technical system TS automatically. The apparatus comprises an interface 101, an input unit 102, a processor 103, and an output module 104. The apparatus 100 can comprise software and/or hardware components.

The interface 101 is configured to access a pre-trained language model LLM1, e.g., GPT-3 or BERT. The pre-trained language model LLM1 can also be described as a large language model. The language model LLM1 can be for example accessed via a network NW, e.g., the internet. The language model LLM1 is configured/trained to generate output, in particular source code SC, depending on provided input data, wherein the input data are natural language data.

The input module 102 is configured to receive text data TD as input data for the pre-trained language model LLM1. The text data TD are natural language text data and specify that source code SC generated by the pre-trained language model is to be suited for an Entity Component System architecture ECS and for the technical system TS. The text data TD further comprise a generation request GR for generating at least one component, at least one system and/or at least one entity according to the specified Entity Component System architecture ECS. The text data TD can be understood as a prompt for the language model LLM1. The generation request GR is then provided to the language model LLM1 to generate the requested output.

The text data TD can further specify source code of an available component, an available system and/or an available entity according to the specified Entity Component System architecture ECS that describe the technical system TS. In other words, it is possible to provide given source code, e.g., of an entity, a component and/or a system that enable for example simulating the technical system TS and, hence, provide knowledge about the technical system TS to the language model LLM1. Furthermore, the text data TD can specify context information from a technical manual, book, document or similar, that is related to the technical system TS.

The processor is configured to process the text data TD using the pre-trained language model LLM1. In other words, the text data / prompt TD are provided as input for the language model LLM1, such that the language model LLM1 receives in particular the generation request GR together with the specified information in the text data/prompt TD. The language model LLM1 then provides as output a generated source code SC comprising at least one component COMP, the at least one system SYS and/or the at least one entity ENT tailored to an ECS according to generation request GR.

This generated source code SC is then transmitted to the output module 104 that is configured to provide the source code SC for controlling the technical system TS.

For example, the technical system TS can be an industrial robot. The apparatus 100 tailors the prompt TD in a standardized way using the ECS architecture. The input text data TD can be for example:
*The generated software code for the prompt should be tailored to an Entity Component System (ECS) structure. This structure consists of Components implementing the Interface component and to Systems implementing the Abstract Class System. A System has to implement the function void Update(Entity entity) with the following defined task."*

Furthermore the domain knowledge/ context information about the technical system TS is provided as part of the input data TD, for example:
*A full factory requires the transport of different parts and materials. This transport is currently covered with Robots mounted with tools as Claw-Grippers and Vacum Gripper. In Process Simulate a 3D Operation can be created with*
" *var transformation Matrix = new TransformationMatrix(a00, a01, a02, x, a10, a11, a12*, *y, a20, a21, a22, z);*
*var data* = *new TxRoboticViaLocationOperationCreationData(LocationName, Description, Process Starting Time);*
*var robotic Via Operation* = *OperationTree.CreateRoboticViaLocationOperation(data); roboticViaOperation.AbsoluteLocation* = *transformationMatrix;*
*" with a00, a01, a02, x, a10, a11, a12, y, a20, a21, a22, z, Process Starting Time* as *doubles and LocationName and Description* as *string, x, y,z represents the total location while a00, a01, a02, a10, a11, a12, a20, a21, a22, the orientation of the axis 1, 2, 3"*
The domain context can be furthermore enriched by further text from books or user guides. For one simple Position component for example the following structure has to be fulfilled.

The text data TD can therefore comprise information about existing entities:
*There are currently two entities available. The first entity with a Position Component with {x*=*10, y*=*20, z*=*30} and the second one with a Position Component {x=10, y=10, z=10} and Velocity Component {x*=*30, y*=*10, z*=*20}*

Furthermore, context information about existing components and/or systems according to the ECS structure can be provided by the text data TD, for example:
*In the current system the following components and system are available to full fill the in following described task.*

```
 class Position : IComponent { public float X, Y, Z; }
 class Velocity: IComponent { public float X, Y, Z; }
 class MovementSystem : System
 { public void Update(Entity entity) {
 var position = entity.GetComponent<Position>();
 var velocity = entity.GetComponent<Velocity>();
 position.X += velocity.X;
 position.Y += velocity.Y;
 position.Z += velocity.Z;
 }
```

Due to the strict separation of data objects as components and system these data can be fed into the context for the language model LLM1. A user can now send a request GR based on this automatically generated predefined context.

A generation request GR can be for example:
*With this information generate components and systems which can generates Gripp-Position in Process Simulate in c# via a user command line prompt as a system considering x,y,z to generate a GrippComponent.*

It is therefore possible to define as part of the generation request GR a programming language that should be applied when generating the source code SC.

The generation request GR is then provided to the language model LLM1 to fulfil that request. The language model then provides source code SC that can be directly used for controlling and/or simulating the technical system TS.

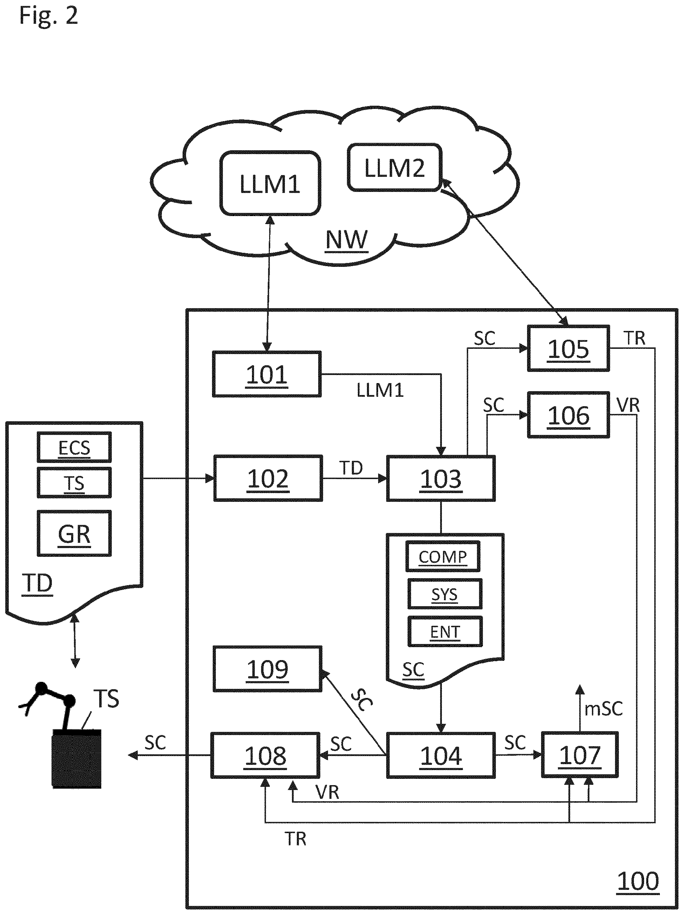

Figure 2 shows an exemplary embodiment of an apparatus for generating a control code for controlling a technical system.

The apparatus comprises an interface 101, an input unit 102, a processor 103, and an output module 104, as described in the context of Fig. 1. The apparatus can further comprise a cyber security module 105, a validation module 106, a modification module 107, a control module 108 and/or a simulation module 109.

The text data (or prompt) TD can specify a cyber security constraint CSC for the generated source code SC. For example, the text data TD can specify that the generated code should not have access to a given network. This cyber security constraint CSC is provided as natural language.

The cyber security constraint CSC is provided to the cyber security module 105, e.g., via the input module 102. The cyber security module 105 is based on a second pre-trained language model LLM2, i.e, the cyber security module 105 is configured to access the second pre-trained language model LLM2. It is possible that the second language model LLM2 is similar or the same as the first language model LLM1. Alternatively, the second language model LLM2 is independent of the first language model LLM1 to ensure independent security checks.

The cyber security module 105 is then configured to validate the generated source code SC against the cyber security constraint CSC using the second language model LLM2 and to output a test result TR.

To this end, the second language model LLM2 is preferably trained to process a given source code SC and perform a cyber security check on said source code SC using the predefined cyber security constraint CSC. In other words, generated source code SC can be checked via the second language model LLM2 that is tailored for security checks.

In that way the cyber security module 105 can check the generated source code SC to avoid common cyber security issues in the code. Preferably, pre-defined cyber security checks are provided to the cyber security module 105.

The validation module 106 is configured to validate a given functionality and/or efficiency of the generated source code SC and to output a validation result VR. It is possible to check functional and/or non-functional requirements. The functional test can be tested for example by running the source code SC, while non-functional requirements can be tested with alternative systems, for e.g. memory constraints on the source code SC.

The modification module 107 is configured to modify the generated source code SC depending on the test result TR and/or the validation result VR and to output a modified source code mSC. For example, if the test result TR of the cyber security check shows that the generated source code SC comprises an unwanted network connection, the modification module 107 can be used to delete the relevant code snippet. If for example the validation result VR is negative, the modification module 107 can further modify the source code mSC such that it complies with a given functional and/or non-functional requirement. The modified source code mSC can then be sent again to the cyber security module 105 and/or the validation module such that the generated source code SC can be iteratively improved.

The control module 108 is configured to control CTL the technical system TS depending on the test result TR and/or the validation result VR using the generated source code SC. For example, the source code SC is implemented as part of the control code or used as control code for controlling CTL the technical system TS.

The simulator 109 is configured to execute the generated source code SC and to simulate the technical system TS, i.e., used as a digital twin of the technical system TS. For example, the generated source code can be directly used to run a computer simulation of the technical system TS. It is also possible, that the technical system TS can be controlled based on such a computer simulation.

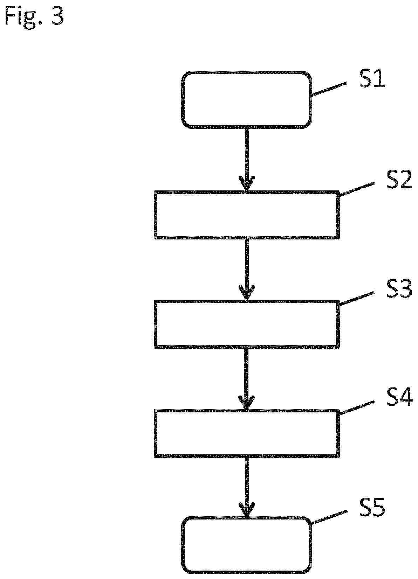

Figure 3 shows an exemplary embodiment of a computer-implemented method for generating a source code for a technical system, for example, a control code for controlling a technical system.

The method comprises the following steps:
In a first step S1 a pre-trained language model is accessed, wherein the pre-trained language model is configured to generate source code depending on provided input data.

In the next step S2, text data are received as input for the pre-trained language model, wherein the text data are natural language text data, wherein the text data specify that source code generated by the pre-trained language model is to be suited for an Entity Component System architecture and for the specified technical system. The text data comprise a generation request for generating at least one component, at least one system and/or at least one entity according to the specified Entity Component System architecture and for the specified technical system.

In the next step S3 the text data are processed using the pre-trained language model, wherein the at least one component, at least one system and/or at least one entity according to the generation request is generated as source code. Therefore, the language model provides as output at least one component, at least one system and/or at least one entity according to the ECS architecture and suitable for controlling/simulating the technical system.

In the next step S4 the generated source code is provided to a control module for controlling the technical system.

In the next step S5 the technical system is controlled by the control module using the generated source code as control code. For example, the technical system can be simulated using the generated source code and a functionality of the technical system can be controlled based on said computer simulation.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Apparatus (100) for generating a control code for controlling a technical system (TS), comprising:
- an interface (101) that is configured to access a pre-trained language model (LLM1), wherein the pre-trained language model (LLM1) is configured to generate source code depending on provided input data,
- an input module (102) that is configured to receive text data (TD) as input data for the pre-trained language model (LLM1),
- wherein the text data (TD) are natural language text data,
- wherein the text data (TD) specify that source code generated by the pre-trained language model is to be suited for an Entity Component System architecture (ECS) and for the technical system (TS),
- and wherein the text data (TD) comprise a generation request (GR) for generating at least one component, at least one system and/or at least one entity according to the specified Entity Component System architecture,
- a processor (103) that is configured to process the text data (TD) using the pre-trained language model (LLM1), wherein the at least one component (COMP), the at least one system (SYS) and/or the at least one entity (ENT) according to generation request (GR) is generated as source code (SC),
and
- an output module (104) that is configured to provide the source code (SC) for controlling the technical system (TS).

2. Apparatus according to claim 1, wherein the text data (TD) further specify source code of an available component, an available system and/or an available entity according to the specified Entity Component System architecture (ECS).

3. Apparatus according to one of the preceding claims, wherein the text data (TD) further specify context information related to the technical system (TS).

4. Apparatus according to one of the preceding claims, wherein the text data (TD) further specify at least one cyber security constraint (CSC) for the generated source code.

5. Apparatus according to claim 4, further comprising a cyber security module (105) that is based on a second pre-trained language model (LLM2) and that is configured to validate the generated source code (SC) against the cyber-security constraint (CSC) and to output a test result (TR).

6. Apparatus according to one of the preceding claims, further comprising a validation module (106) that is configured to validate a functionality of the generated source code (SC) and to output a validation result (VR).

7. Apparatus according to claim 4 or 6, further comprising a modification module (107) that is configured to modify the generated source code (SC) depending on the test result (TR) and/or the validation result (VR) and to output a modified source code (mSC).

8. Apparatus according to one of the preceding claims, further comprising a control module (108) that is configured to control (CTL) the technical system (TS) depending on the test result and/or the validation result using the generated source code (SC).

9. Apparatus according to one of the preceding claims, further comprising a simulator (109) that is configured to execute the generated source code (SC) and to simulate the technical system (TS).

10. Computer-implemented method for generating a control code for controlling a technical system, comprising the following steps:
- accessing (S1) a pre-trained language model, wherein the pre-trained language model is configured to generate source code depending on provided input data,
- receiving (S2) text data as input for the pre-trained language model, wherein the text data are natural language text data, wherein the text data specify that source code generated by the pre-trained language model is to be suited for an Entity Component System architecture and for the technical system, and wherein the text data comprise a generation request for generating at least one component, at least one system and/or at least one entity according to the specified Entity Component System architecture,
- processing (S3) the text data using the pre-trained language model, wherein the at least one component, at least one system and/or at least one entity according to the generation request is generated as source code,
and
- providing (S4) the source code for controlling the technical system.

11. Computer program product directly loadable into the internal memory of a digital computer, comprising source code portions for performing the method steps of claim 10 when said computer program product is run on the computer.
